(19) **Europäisches Patentamt**
**European Patent Office**
**Office européen des brevets**

(11) **EP 1 488 642 B1**

(12) **FASCICULE DE BREVET EUROPEEN**

(45) Date de publication et mention
de la délivrance du brevet:
**07.05.2008 Bulletin 2008/19**

(51) Int Cl.:
***H04N 7/167*** (2006.01)

(21) Numéro de dépôt: **03725268.1**

(86) Numéro de dépôt international:
**PCT/FR2003/000710**

(22) Date de dépôt: **05.03.2003**

(87) Numéro de publication internationale:
**WO 2003/075571 (12.09.2003 Gazette 2003/37)**

(54) **PROTOCOLE DE CONTROLE D ACCES, PAR PLAGES DE DUREES SPECIFIQ UES, A DES INFORMATIONS EMBROUILLEES**

PROTOKOLL ZUR REGELUNG DES ZUGANGS DURCH SPEZIFISCHE ZEITBEREICHE AUF VERWÜRFELTE DATEN

PROTOCOL FOR CONTROLLING ACCESS, THROUGH SPECIFIC TIME RANGES, TO SCRAMBLED DATA

(84) Etats contractants désignés:
**AT BE BG CH CY CZ DE DK EE ES FI FR GB GR HU IE IT LI LU MC NL PT RO SE SI SK TR**

(30) Priorité: **06.03.2002 FR 0202857**

(43) Date de publication de la demande:
**22.12.2004 Bulletin 2004/52**

(73) Titulaire: **Viaccess**
**92057 Paris La Defense (FR)**

(72) Inventeurs:
• **BECKER, Claudia**
**35000 RENNES (FR)**
• **CODET, André**
**35200 RENNES (FR)**
• **FEVRIER, Pierre**
**35250 SAINT SULPICE LA FORET (FR)**
• **GUIONNET, Chantal**
**35510 CESSON SEVIGNE (FR)**

(74) Mandataire: **Habasque, Etienne J. Jean-François et al**
**Cabinet Lavoix,**
**2, place d'Estienne d'Orves**
**75441 Paris Cédex 09 (FR)**

(56) Documents cités:
**EP-A- 0 884 906          WO-A-01/20836**
**US-A1- 2001 012 366**

## Description

L'invention concerne un protocole ou une méthode de contrôle d'accès, par plages de durées spécifiques à des informations embrouillées.

Dans ce texte les termes "protocole" et "méthode" sont utilisés comme des synonymes.

A l'heure actuelle, la transmission d'informations embrouillées connaît un essor sans précédent, en raison de l'explosion manifeste des prestations de services mises en oeuvre à partir de la transmission de données support d'informations, de types les plus divers.

D'une manière générale, les processus de contrôle d'accès à des données embrouillées, lorsque ces données sont transmises en mode point-multipoint par exemple, sont mis en oeuvre en comparant les critères d'accès fournis dans des messages de contrôle d'accès, messages ECM, vis-à-vis de titres ou droits d'accès, détenus par chaque abonné, ces droits d'accès étant inscrits dans le décodeur mis à disposition de chaque abonné, ou mieux, dans le module de contrôle d'accès, réalisé sous forme d'une carte à microprocesseur par exemple et attribué à chaque abonné.

D'une manière plus spécifique, on rappelle que les informations sont embrouillées au niveau d'un centre d'émission, au moyen d'une clé de service. La clé de service est contenue dans un mot de contrôle. Le mot de contrôle est chiffré au moyen d'une clé d'exploitation et le cryptogramme du mot de contrôle est transmis, vers au moins un terminal de désembrouillage associé à un module de contrôle d'accès muni d'un processeur de sécurité.

Les informations embrouillées et les messages de contrôle d'accès périodiques, messages ECM, comportent le cryptogramme du mot de contrôle et des critères d'accès, le mot de contrôle et le cryptogramme du mot de contrôle étant changés périodiquement. L'accès aux informations embrouillées au niveau de chaque terminal de désembrouillage est conditionnel à la vérification à la valeur vraie des critères d'accès vis-à-vis d'au moins un droit d'accès inscrit dans le module de contrôle d'accès, puis au déchiffrement du cryptogramme du mot de contrôle au moyen de la clé d'exploitation, afin de restituer le mot de contrôle et effectuer le désembrouillage des informations embrouillées au moyen de ce dernier.

Pour une description plus détaillée de tels processus de contrôle d'accès, on pourra utilement se reporter aux dispositions de la norme UTE C90-007 Janvier 1994.

A l'heure actuelle, en référence aux textes et dispositions de la norme précitée, en l'absence de dispositions en réglant les modalités de traitement, les diffusions successives d'un programme télévisé, la visualisation d'un programme embrouillé enregistré ou l'accès à un programme, lors d'une nouvelle diffusion, sont équivalents à une première diffusion, du point de vue du contrôle d'accès proprement dit.

En particulier, il n'est pas possible, actuellement, de contrôler spécifiquement, par plages temporelles, le nombre de visualisations, ni le retour arrière, en cas d'enregistrement.

En conséquence, lorsque les systèmes de contrôle d'accès sont munis en outre d'un système de gestion de porte-jetons électronique, permettant de gérer totalement le contrôle d'accès en termes de gestion comptable par exemple, toute nouvelle visualisation ou tout retour arrière, dans le cas d'un enregistrement, se traduisent soit par un débit systématique du porte-jetons électronique de l'abonné dans le mode d'accès dit d'achat impulsif à la durée, soit par un accès illimité, dans le cas où l'accès est autorisé dans tous les autres modes d'accès commercialisés.

US 2001/0012366 A1 décrit un système de contrôle d'accès à des programmes diffusés dans lesquels un numéro d'ordre affecté à des scènes successives est utilisé.

WO 01/20836 A traite de la dissémination de clés de chiffrement/déchiffrement, de clés secrètes et/ou de clés publiques-privés, et de l'utilisation de clés éphémères dans les transmissions point à point.

EP-A-0 884 906 décrit un système de contrôle d'accès mettant en oeuvre des descripteurs de mode d'accès (DMA).

La présente invention a pour objet de remédier aux inconvénients et limitations des processus de contrôle d'accès de l'art antérieur.

En particulier, de manière plus spécifique, la présente invention a pour objet un protocole de contrôle d'accès à des informations embrouillées, par plages de durées spécifiques, de valeur de durée déterminée ajustable.

Un autre objet de la présente invention est la mise en oeuvre d'un protocole de contrôle d'accès à des informations embrouillées par plages de durées spécifiques, l'origine de toute plage de durée spécifique pouvant être définie en référence à une action spécifique de chaque abonné.

Un autre objet de la présente invention, en raison du caractère ajustable de la durée de la plage d'accès et/ou de l'origine de ladite plage d'accès en référence à une action spécifique de chaque abonné, est la mise en oeuvre d'une pluralité de nouveaux services, liés à la diffusion de programmes télévisés, services tels que service de prévisualisation d'un programme télédiffusé pendant une durée déterminée, service d'accès contrôlé en retour arrière, après un enregistrement d'un programme télédiffusé, service de comptage du nombre de visualisations lors de la diffusion en boucle de programmes télévisés.

Un autre objet de la présente invention est la mise en oeuvre d'un protocole de contrôle d'accès, permettant, grâce à l'identification de tout ou partie d'un programme déjà visualisé par un abonné, et donc auquel l'accès a été accordé, de discriminer toute période déjà visualisée par cet abonné, et d'autoriser ainsi une gestion optimisée des visualisations, sur critère de nombre déterminé d'une même visualisation respectivement d'une nouvelle visualisation.

Un autre objet de la présente invention est, dans le cas de l'enregistrement de programmes télévisés, la mise en oeuvre d'un protocole de contrôle d'accès permettant de limiter le nombre de lectures, ainsi que l'amplitude de retour arrière autorisé.

Le protocole de contrôle d'accès à des informations embrouillées, objet de l'invention, est mis en oeuvre au niveau d'un centre d'émission. L'embrouillage est effectué au moyen d'une clé de service contenue dans un mot de contrôle. Le mot de contrôle est chiffré au moyen d'une clé d'exploitation et le protocole de contrôle d'accès consiste au moins à transmettre, vers au moins un terminal de désembrouillage associé à un module de contrôle d'accès muni d'un processeur de sécurité, les informations embrouillées et des messages de contrôle d'accès périodiques, messages ECM, comportant des critères d'accès et le cryptogramme du mot de contrôle. Le mot de contrôle et le cryptogramme du mot de contrôle sont changés périodiquement. L'accès aux informations embrouillées au niveau de chaque terminal de désembrouillage est conditionnel à la valeur vraie des critères d'accès vis-à-vis d'au moins un droit d'accès inscrit dans le module de contrôle d'accès, puis au déchiffrement du cryptogramme du mot de contrôle au moyen de la clé d'exploitation, afin de restituer le mot de contrôle et effectuer le désembrouillage des informations embrouillées.

Il est remarquable en ce qu'il consiste en outre à attribuer, à chaque message de contrôle d'accès, message ECM, un numéro vérifiant une fonction monotone non décroissante, les messages $ECM_j$, consécutifs, de numéro $T_j$ successif, représentant une base de temps formée par une pluralité d'intervalles de temps élémentaires de transmission de quanta successifs élémentaires d'information embrouillée. Il consiste ensuite à détecter, au niveau de chaque terminal de désembrouillage, le numéro de chaque message de contrôle d'accès, message $ECM_j$, puis sur requête de l'utilisateur de ce terminal de désembrouillage d'un accès conditionnel à au moins une partie des informations embrouillées, à sélectionner le numéro d'un message de contrôle d'accès, correspondant à l'instant d'émission de cette requête, et à constituer une origine de temps de cette base de temps.

L'accès par l'utilisateur aux informations embrouillées est autorisé en fonction d'un critère d'accès spécifique à partir de cette origine de la base de temps, sur une plage temporelle correspondant à une pluralité d'intervalles de temps élémentaires définissant une pluralité de quanta successifs élémentaires d'informations embrouillées.

Le protocole de contrôle d'accès objet de la présente invention est particulièrement adapté à la transmission point-multipoint d'informations embrouillées, notamment de programmes de télévision, et à la gestion des services de télévision à péage, en général.

Il sera mieux compris à la lecture de la description et à l'observation des dessins ci-après dans lesquels :

- la figure 1a représente, à titre purement illustratif, un organigramme général de mise en oeuvre du protocole objet de la présente invention ;
- la figure 1b représente différents diagrammes temporels illustratifs d'une plage temporelle constituant un intervalle arrière, un intervalle avant et un intervalle avant-arrière respectivement ;
- la figure 1c représente, à titre illustratif, différents exemples de mise en oeuvre de fonction monotone non décroissante ;
- la figure 2 représente, à titre purement illustratif, un organigramme spécifique de mise en oeuvre du protocole objet de la présente invention, plus particulièrement adapté à la gestion de services tels qu'un service de prévisualisation d'un programme TV télédiffusé embrouillé, un service de retour arrière, un service de gestion du nombre de visualisations, lors d'une diffusion en boucle.

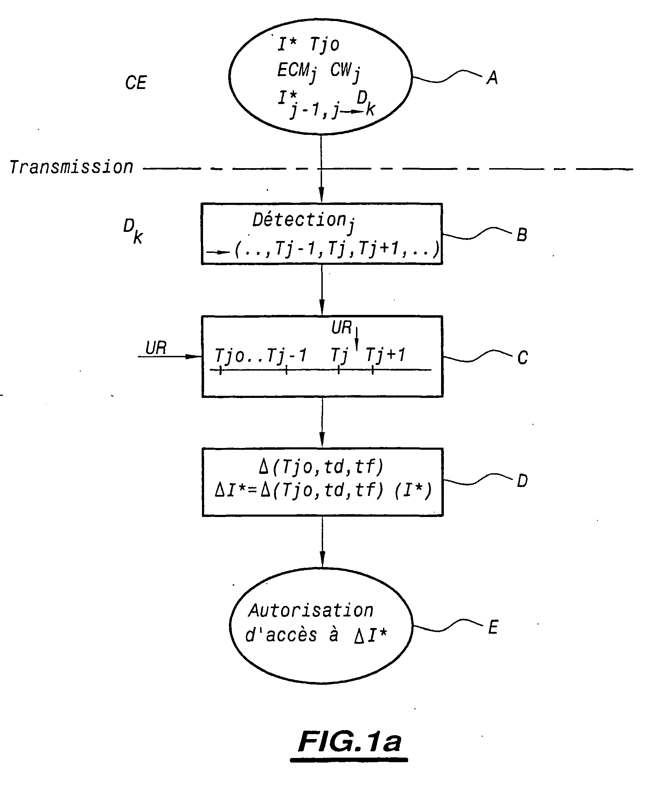

Une description plus détaillée du protocole de contrôle d'accès à des informations embrouillées conforme à l'objet de la présente invention sera maintenant donnée en liaison avec la figure 1a et les figures suivantes.

D'une manière générale, on rappelle que le protocole objet de la présente invention est mis en oeuvre au niveau d'un centre d'émission CE, d'une part, et au niveau d'une pluralité de terminaux de désembrouillage $D_k$, d'autre part, à chaque terminal de désembrouillage étant associé un module de contrôle d'accès constitué, par exemple, par une carte à microprocesseur dédiée munie d'un processeur de sécurité.

Les informations I sont embrouillées au niveau du centre d'émission CE au moyen d'une clé de service contenue dans un mot de contrôle CW, ce mot de contrôle étant chiffré au moyen d'une clé d'exploitation de manière connue en tant que telle.

Les informations embrouillées I* et des messages de contrôle d'accès périodiques, messages dits ECM, sont émis. Les messages précités comportent des critères d'accès. Le cryptogramme du mot de contrôle CW, le mot de contrôle en particulier, sont changés périodiquement. L'accès aux informations embrouillées au niveau de chaque terminal de désembrouillage $D_k$ est conditionnel à la vérification de la valeur vraie des critères d'accès véhiculés par les messages de contrôle d'accès ECM vis-à-vis d'au moins un droit d'accès inscrit dans le module de contrôle d'accès associé à chaque terminal de désembrouillage $D_k$.

Le déchiffrement du cryptogramme du mot de contrôle est effectué au niveau de chaque terminal de désembrouillage et en particulier du module de contrôle d'accès au moyen de la clé d'exploitation, afin de restituer le mot de contrôle CW et effectuer le désembrouillage des informations embrouillées I*.

Conformément à un aspect remarquable du protocole de contrôle d'accès à des informations embrouillées objet de la présente invention, celui-ci consiste en outre en particulier au centre d'émission CE, à attribuer à chaque message de contrôle d'accès, messages ECM, un numéro $T_j$ vérifiant une fonction monotone non décroissante, les messages de contrôle d'accès étant notés, pour cette raison, $ECM_j$ où j désigne le rang du numéro précité.

Selon un aspect particulièrement remarquable du protocole objet de la présente invention, les messages de contrôle $ECM_j$ consécutifs de numéro successif $T_j$ représentent une base de temps formée par une pluralité d'intervalles de temps élémentaires de transmission de quanta successifs élémentaires d'informations embrouillées. On comprend ainsi qu'entre deux numéros successifs $T_{j-1}$, $T_j$ par exemple et correspondant à au moins un intervalle de temps δ représentatif de la périodicité d'émission des messages de contrôle $ECM_j$ on transmet ainsi un quantum élémentaire d'informations embrouillées noté $\delta I^*_{(j-1)}$ vers chaque terminal de désembrouillage $D_k$.

Au niveau de chaque terminal de désembrouillage $D_k$ précité le protocole objet de la présente invention consiste alors, en une étape B, à détecter au niveau de chacun des terminaux de désembrouillage précités le numéro $T_j$ de chaque message de contrôle d'accès $ECM_j$. L'opération de détection du numéro de chaque message de contrôle d'accès est assortie d'une mémorisation de ce numéro courant.

Selon un autre aspect particulièrement remarquable du protocole objet de la présente invention, celui-ci consiste, sur requête de l'utilisateur du terminal de désembrouillage $D_k$ considéré d'un accès conditionnel à au moins une partie des informations embrouillées, à sélectionner en une étape C le numéro d'un message de contrôle d'accès $ECM_j$ correspondant à l'instant d'émission de la requête UR.

On conçoit en particulier que l'utilisateur émettant une requête UR sur le terminal de désembrouillage, cette requête pouvant être émise à partir d'un sélecteur de programmes tel qu'une télécommande par exemple ou par l'intermédiaire de tout autre moyen, l'instant d'émission de la requête est repéré par rapport au numéro courant $T_j$ détecté à l'étape B précédente, et en particulier par rapport à un événement antérieur, tel qu'un accès précédent, ainsi qu'il sera décrit ultérieurement dans la description. Cet événement antérieur peut correspondre à un accès précédent définissant l'origine de la base de temps de numéro $T_{jo}$.

En particulier, le numéro $T_{jo}$ constitutif de l'origine des temps de la base de temps peut avantageusement correspondre au numéro du message $ECM_{jo}$ du dernier accès contrôlé, non gratuit, précédent, mémorisé dans le module de contrôle d'accès, ou la carte, attribué à l'utilisateur, ainsi qu'il sera décrit ultérieurement dans la description, numéro $T_{jo}$ dont on dispose à l'étape A.

Sur la figure 1a à l'étape C on a représenté symboliquement la suite des numéros successifs $T_{j-1}$, $T_j$, $T_{j+1}$ et l'occurrence d'une requête utilisateur UR, l'origine de la base de temps $T_{jo}$ étant réputée inférieure à la séquence des numéros successifs $T_{j-1}$, $T_j$, $T_{j+1}$. En tout état de cause, on comprendra que la valeur $T_{jo}$ d'un accès précédent peut toutefois être supérieure à la valeur courante $T_j$ repérant l'émission de la requête UR par l'utilisateur.

C'est le cas, par exemple, lors de l'accès à des programmes diffusés en boucle avec les mêmes paramètres de contrôle d'accès $ECM_j$ ou lors de l'accès à des programmes enregistrés.

L'étape C de sélection du numéro du message de contrôle d'accès peut alors être suivie d'une étape D consistant à autoriser l'accès par l'utilisateur aux informations embrouillées en fonction d'un critère d'accès spécifique à partir de l'origine $T_{jo}$ de la base de temps sur une plage temporelle correspondant à une pluralité d'intervalles de temps élémentaires définissant une pluralité de quanta successifs élémentaires d'informations embrouillées. Sur la figure 1a et pour cette raison on a représenté par

$$\Delta \ (T_{jo},\ td,\ tf)$$

la plage temporelle d'accès accordé à l'utilisateur, plage temporelle dans laquelle :

- jo représente le rang du numéro $T_{jo}$ définissant l'origine de la base de temps ;
- td représente un décalage de numéros dans la base de temps par rapport à l'origine $T_{jo}$ précitée ;
- tf représente un autre décalage de numéros par rapport à l'origine $T_{jo}$ précitée.

A titre d'exemple non limitatif on indique que les décalages précités correspondent à au moins un intervalle de temps élémentaire δ pris égal à la période d'émission des messages de contrôle d'accès $ECM_j$.

Dans ces conditions, chaque intervalle de temps élémentaire successif à l'instant j de réception du message $ECM_j$ est noté : δ(j) et le quantum d'information élémentaire correspondant :

$$\delta I^*_{(j)} = \delta_{(j)}(I^*)$$

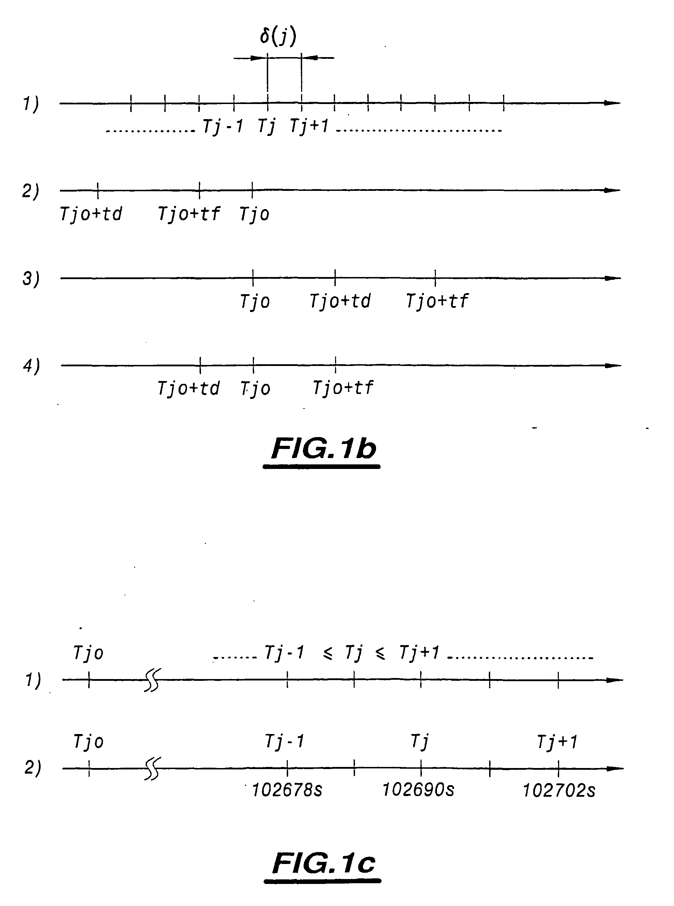

On comprend ainsi que l'utilisateur, grâce à la requête UR formulée, se voit autoriser un accès à l'information $\Delta I^* = \Delta(T_{jo}, td, tf)(I^*)$ sur une pluralité d'intervalles de temps élémentaires $\delta_{(j)}$ à l'étape E finale sur la figure 1, pour des quanta d'information successifs $\delta I^*_{(j)}$ sur la plage temporelle $\Delta(T_{jo}, td, tf)$.

La figure 1b a pour objet d'illustrer les paramètres de définition de numéros d'accès courants correspondant à la requête de l'utilisateur, d'accès précédents de l'utilisateur mémorisés dans la carte pour constituer l'origine $T_{jo}$ de la base de temps correspondante et de décalage temporel de début td respectivement de fin tf par rapport à l'origine de la base temporelle $T_{jo}$, les paramètres $T_{jo}$, td et tf permettant ainsi de définir la plage temporelle correspondant à l'accès autorisé selon le critère d'accès spécifique, ainsi que mentionné précédemment dans la description.

Sur la figure 1b, au point 1), on a représenté la succession des numéros de réception des messages $ECM_j$, j étant réputé désigner le rang du numéro courant du message $ECM_j$ correspondant.

En référence aux points 2), 3) et 4) de la figure 1b, on indique que:

- $T_{jo}$ origine de la base temporelle est le dernier accès précédent mémorisé dans la carte de l'utilisateur, accès non gratuit par exemple, pour le programme d'informations embrouillées I* considéré ;
- td est le décalage par rapport à l'origine $T_{jo}$ correspondant au début de la zone temporelle, ou plage temporelle, dont l'accès est autorisé sur critère d'accès spécifique ;
- tf est le décalage par rapport à l'origine $T_{jo}$ correspondant à la fin de la zone temporelle, ou plage temporelle, dont l'accès est autorisé selon le critère d'accès spécifique.

En référence aux points 2), 3) et 4) de la figure 1b, on indique que :

- la plage temporelle, ou intervalle, est en arrière pour td <= 0 et tf <=0;
- l'intervalle, ou plage temporelle, est en avant pour td >= 0 et tf>=0;
- la plage temporelle, ou intervalle, est à cheval, c'est-à-dire avant et arrière pour td <= 0 et tf >=0.

D'une manière spécifique non limitative, on rappelle que le numéro courant d'un message $ECM_j$ est toujours non décroissant lors de l'émission d'un programme diffusé. Au contraire, lorsque ce programme est diffusé en boucle, ou lorsqu'il correspond à un programme enregistré sur un magnétoscope et rejoué, la valeur $T_{jo}$ mémorisée dans la carte attribuée à l'abonné peut correspondre à un accès précédent et se placer relativement à l'intervalle, ou plage temporelle, défini par $T_{jo}$, td et tf, ainsi que représenté aux points 2), 3) et 4) de la figure 1b. Ces trois situations sont les situations d'intérêt pour la mise en oeuvre du protocole objet de la présente invention.

Différents modes de mise en oeuvre d'un numéro $T_j$ vérifiant une fonction monotone non décroissante seront maintenant décrits en liaison avec la figure 1c.

Au point 1 de la figure 1c, on a représenté une fonction monotone non décroissante formée par une fonction continûment croissante de la période d'émission des messages de contrôle $ECM_j$. A titre d'exemple, chaque numéro $T_j$ est constant sur la durée du temps élémentaire $\delta_{(j)}$ et vérifie la relation :

$$T_{j-1} \leq T_j \leq T_{j+1}.$$

Au point 2 de la figure 1c, on a représenté une fonction monotone non décroissante formée par une fonction croissante par paliers de l'instant d'émission des messages de contrôle $ECM_j$.

En particulier, en référence au point 2 de la figure précitée, on comprend que chaque message de contrôle $ECM_j$ peut être répété sur un ou plusieurs intervalles de temps élémentaires, entre les numéros successifs $T_{j-1}$, $T_j$ et suivants. Un tel mode opératoire permet de définir une base de temps de résolution distincte de la période d'émission des messages de contrôle $ECM_j$.

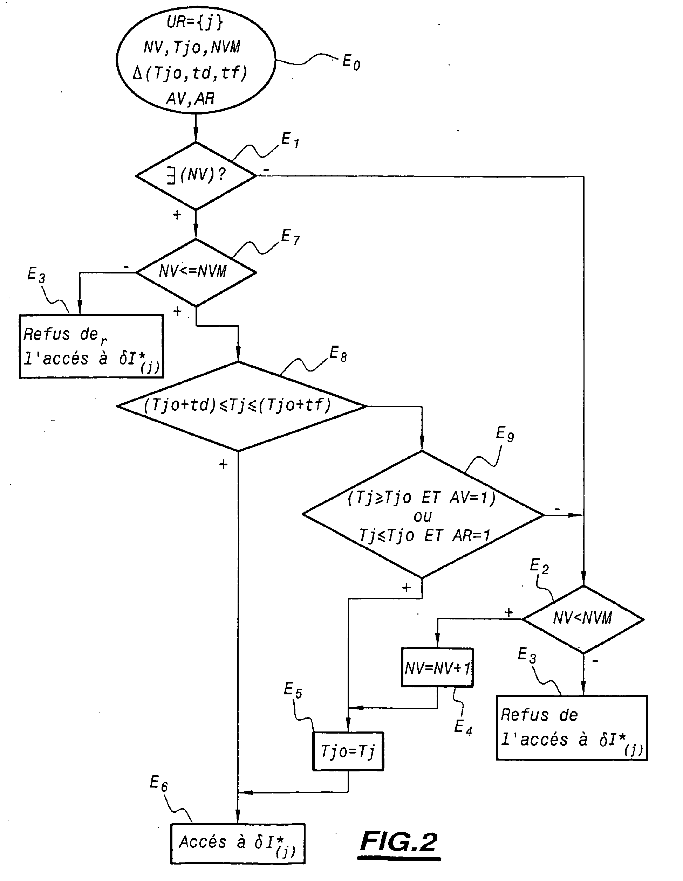

Ainsi que représenté en outre au même point 2, chaque numéro $T_j$ peut être défini par une date. Dans l'exemple donné sur la figure 2, la date est une valeur temporelle, exprimée en secondes. Chaque palier $T_{j-1}$, $T_j$ et suivants, par exemple, est alors défini par la plage temporelle représentée par les deux dates distinctes.

Le protocole objet de la présente a pour objet de permettre la gestion du nombre de visualisations NV réalisées sur un même programme diffusé et/ou enregistré par un utilisateur, chaque visualisation pouvant comporter un ou plusieurs accès à ce même programme, deux ou plusieurs accès distincts pouvant appartenir à la même visualisation et le nombre de visualisations, dans cette situation, étant inchangé, aucune facturation supplémentaire, dans une telle situation, n'étant imputée à l'utilisateur.

Au contraire, le passage d'un accès à un autre accès, par l'utilisateur sur un même programme dans des conditions autres que le critère d'accès spécifique précédemment mentionné dans la description, fait l'objet de la comptabilisation de deux visualisations distinctes, une visualisation et une autre visualisation, l'autre visualisation faisant l'objet d'une incrémentation du nombre de visualisations et d'une facturation supplémentaire imputée à l'utilisateur, ainsi qu'il sera décrit ultérieurement dans la description.

En référence à la figure 2, on indique que, pour assurer la gestion du nombre de visualisations NV de programmes, sur requête de l'utilisateur, selon le critère d'accès spécifique dans la plage temporelle définie précédemment dans la description et en dehors de cette plage temporelle, celui-ci peut consister, ainsi que représenté sur la figure 2 précitée, en une étape $E_0$, à définir un nombre maximum autorisé de visualisations pour le programme embrouillé diffusé contenant les informations embrouillées I*, le nombre maximum autorisé de visualisations étant noté NVM. Le protocole objet de l'invention peut consister, en outre, à définir une première variable booléenne AV dont la valeur vraie est représentative de l'autorisation de l'accès avant aux informations embrouillées I* au-delà de l'origine et en dehors de la plage temporelle précédemment définie dans la description, l'accès aux informations au-delà de l'origine et en dehors de la plage temporelle étant autorisé, sur critère d'accès distinct du critère d'accès spécifique définissant l'accès à la plage temporelle précitée, sans incrément du nombre de visualisations.

Il peut consister également à définir une deuxième variable booléenne AR dont la valeur vraie est représentative de l'autorisation de l'accès arrière aux informations embrouillées en-deçà de l'origine et en dehors de la plage temporelle, sur critère d'accès distinct du critère d'accès spécifique précédemment mentionné, sans incrément du nombre de visualisations.

D'une manière générale, on rappelle que, dans un mode de mise en oeuvre préférentiel du protocole objet de la présente invention, le critère d'accès spécifique à la zone ou plage d'accès temporelle définie précédemment dans la description, en particulier par les paramètres td et tf de décalage vis-à-vis de l'origine de la base de temps $T_{jo}$, peut avantageusement consister à donner un accès libre dans cette plage à l'utilisateur, c'est-à-dire un accès sans facturation.

En outre, on indique, à titre d'exemple purement illustratif, que les variables booléennes AV et AR sont désignées comme ayant la valeur 1 pour la valeur vraie de celles-ci et la valeur zéro pour la valeur complémentée de la valeur vraie ou valeur fausse de ces dernières.

A l'étape $E_0$ de la figure 2, on dispose, lors de l'émission de la requête UR par l'utilisateur, définie par le rang j du numéro $T_j$ du message de contrôle d'accès $ECM_j$ correspondant :

- de variables NV, $T_{jo}$ lorsqu'un accès précédent à ce même programme de données embrouillées a été effectué, $T_{jo}$ représentant la valeur mémorisée servant d'origine pour l'accès suivant à partir de la requête UR, et NV désignant le nombre de visualisations déjà réalisées ;
- de NVM nombre maximum autorisé de visualisations ;
- des variables booléennes AV et AR ;
- de la plage temporelle $\Delta(T_{jo}, td, tf)$.

Enfin, on indique que, pour la mise en oeuvre du protocole objet de la présente invention, il peut être avantageux, lorsque aucun accès et donc aucune visualisation du programme de données embrouillées correspondant n'ont été réalisés par l'utilisateur, d'initialiser le nombre de visualisations NV à la valeur zéro.

Dans ces conditions, ainsi que représenté en figure 2, le protocole objet de l'invention peut consister à soumettre la variable NV, à un test de vérification d'existence. Ce test est noté, l'étape $E_1$ :

$$\exists\ (NV)\ ?$$

Sur réponse négative au test $E_1$, c'est-à-dire s'il existe une variable NV égale à zéro pour les informations embrouillées I* considérées, alors une étape $E_2$ est appelée, laquelle consiste à comparer la valeur du nombre de visualisations NV par comparaison d'infériorité stricte à la valeur du nombre de visualisations maximum NVM.

On comprend, bien entendu, que, dans cette situation de départ, la réponse au test $E_2$ est, en général, toujours positive, puisque le nombre de visualisations NV est égal à zéro dans cette situation.

Sur réponse positive au test $E_2$, une étape $E_4$ est appelée, laquelle consiste à incrémenter d'une unité la valeur du nombre de visualisations selon la relation :

$$NV = NV + 1.$$

On comprend, dans ces conditions, que l'accès au programme d'informations embrouillées I* est le premier accès.

Dans ces conditions, l'étape $E_4$ peut alors être suivie d'une étape $E_5$ consistant, pour la première visualisation, à actualiser l'origine de la base de temps, c'est-à-dire la valeur $T_{jo}$, à la valeur $T_j$ qui n'est autre que le numéro de réception de la requête UR, c'est-à-dire le numéro de réception du message $ECM_j$ correspondant.

L'étape $E_5$ d'actualisation de l'origine de la base de temps peut alors être suivie d'un accès au quantum d'information élémentaire, à l'étape $E_6$, ce quantum d'information élémentaire étant noté $\delta I^*_{(j)}$. On comprend, dans ces conditions, que le premier accès correspond à une première visualisation et que, dans ces conditions, le critère d'accès appliqué est un critère d'accès distinct du critère d'accès spécifique correspondant à un libre accès.

Au contraire, sur réponse positive au test $E_1$ précité, il existe au moins un accès antérieur et au moins une visualisation antérieure en raison de l'existence de la valeur NV, laquelle est différente de zéro.

Dans ces conditions, l'étape $E_1$ est suivie d'une étape $E_7$, laquelle consiste à comparer et à soumettre le nombre de visualisations NV à un test de comparaison d'infériorité ou d'égalité au nombre maximum autorisé de visualisations NVM.

Sur réponse négative au test $E_7$ précité, l'accès aux informations embrouillées est refusé, à l'étape $E_3$, car l'utilisateur a manifestement dépassé son quota de visualisations NVM.

Au contraire, sur réponse positive au test de comparaison d'infériorité ou d'égalité de l'étape $E_7$, le protocole objet de l'invention consiste à soumettre le numéro $T_j$ courant à un test d'appartenance à la plage tem-

porelle à l'étape $E_8$.

Le test de l'étape $E_8$ d'appartenance à la plage temporelle du numéro courant $T_j$ vérifie la relation :

$$(T_{jo} + td) <= T_j <= (T_{jo} + tf).$$

Sur réponse positive au test $E_8$, l'accès au quantum d'information élémentaire embrouillée $\delta I^*_{(j)}$ est autorisé sur critère d'accès spécifique pendant la plage temporelle aux informations embrouillées à l'étape $E_6$ précédemment décrite dans la description.

On comprend, en particulier, que l'accès pendant la plage temporelle consiste, bien entendu, à autoriser l'accès successif à chaque quantum d'information recouvrant la plage temporelle, ainsi que mentionné précédemment dans la description.

On comprend également que, lorsque le critère d'accès spécifique correspond à un critère d'accès libre, c'est-à-dire en l'absence de facturation imputée à l'utilisateur, alors l'accès est réalisé directement, à l'étape $E_6$, en l'absence de toute incrémentation du nombre de visualisations NV.

Au contraire, sur réponse négative au test de l'étape $E_8$, on autorise l'accès aux informations embrouillées, sur critère d'accès distinct du critère d'accès spécifique, conditionnellement à la valeur vraie des variables booléennes précédemment mentionnées dans la description.

On comprend en effet que, compte tenu de la valeur des variables booléennes précitée, il est possible de discriminer la contribution de tout nouvel accès, en amont ou en aval de l'origine précitée, à une nouvelle visualisation ou, au contraire, l'absence de contribution à une nouvelle visualisation.

Ainsi, en l'absence d'appartenance du numéro $T_j$ courant à la plage temporelle précitée, c'est-à-dire sur réponse négative au test $E_8$, l'autorisation d'accès sur critère d'accès distinct du critère d'accès spécifique conditionnellement à la valeur vraie des variables booléennes, peut consister, ainsi que représenté sur la figure 2, à soumettre, en une étape $E_9$, le numéro $T_j$ courant représentatif de l'instant d'émission de la requête UR et la première variable booléenne AV à un premier test logique comportant la vérification de l'égalité ou de la supériorité du numéro $T_j$ courant à l'origine $T_{jo}$, ainsi que la vérification de la valeur vraie de la première variable booléenne AV pour autoriser l'accès avant aux informations embrouillées.

Le test $E_9$ consiste également à soumettre le numéro $T_j$ courant et la deuxième variable booléenne AR à un deuxième test logique comportant la vérification de l'égalité ou de l'infériorité du numéro $T_j$ courant précité à l'origine $T_{jo}$, ainsi que la vérification de la valeur vraie de la deuxième variable booléenne AR pour autoriser l'accès arrière aux informations embrouillées.

Sur la figure 2, au test $E_9$, le premier et le deuxième tests logiques vérifient la relation :

$$(T_j >= T_{jo} \text{ ET } AV = 1)$$

ou

$$(T_j <= T_{jo} \text{ ET } AR = 1)$$

Sur réponse positive au test $E_9$, c'est-à-dire sur réponse positive à l'un ou l'autre des premier respectivement deuxième tests logiques précédemment mentionnés, on autorise l'accès avant respectivement arrière en l'absence d'incrémentation du nombre de visualisations aux informations embrouillées.

On comprend en effet que, pour toute requête UR correspondant à un numéro de réception $T_j$ en dehors de la plage temporelle définie à l'étape $E_8$ et supérieur à l'origine $T_{jo}$, la valeur vraie de la variable booléenne AV, indiquant une requête de marche avant c'est-à-dire de poursuite de la visualisation, indique que l'utilisateur souhaite procéder à une poursuite de la visualisation antérieure pour continuer cette dernière. Ceci peut être réalisé par l'utilisateur au détriment de la non-visualisation de l'ensemble des quanta d'informations embrouillées compris entre $T_{jo}$ et $T_j$.

Il en est de même pour le deuxième test logique, alors que toutefois, le numéro courant $T_j$ est, cette fois, inférieur à la valeur $T_{jo}$ d'origine. Ceci peut être le cas, par exemple, soit lors de la reprise d'un programme diffusé en boucle ou, le cas échéant, lors d'un retour arrière sur enregistrement par un magnétoscope. De la même façon, dans une telle situation, l'utilisateur souhaite procéder à la visualisation d'un épisode antérieur auquel il a eu accès ou non précédemment.

Pour assurer l'autorisation de l'accès avant respectivement arrière, en l'absence d'incrémentation du nombre de visualisations, cette autorisation est assurée, suite à la réponse positive au test $E_9$, par l'appel de l'étape d'actualisation de la valeur de l'origine $T_{jo}$, laquelle est actualisée à la valeur $T_j$, à l'étape $E_5$. L'étape $E_5$ est alors suivie de l'appel de l'étape $E_6$ d'accès au quantum d'information élémentaire embrouillée $\delta I^*_{(j)}$.

Au contraire, sur réponse négative à l'étape $E_9$, aucun des premier et deuxième tests logiques n'étant vérifié, dans ces conditions, le protocole objet de l'invention consiste à soumettre le nombre de visualisations NV à un test de comparaison d'infériorité stricte au nombre maximum autorisé de visualisations NVM à l'étape $E_2$.

Sur réponse négative au test $E_2$ précité, l'accès au quantum d'information élémentaire embrouillée $\delta I^*_{(j)}$ est refusé, $E_3$, l'utilisateur ayant épuisé son quota de visualisations pour le programme considéré. Au contraire, sur réponse positive au test $E_2$, le nombre de visualisations NV est soumis à une incrémentation d'une unité,

à l'étape $E_4$ précédemment mentionnée dans la description, cette étape $E_4$ étant suivie d'une autorisation d'accès avant respectivement arrière aux informations embrouillées par l'intermédiaire de l'étape d'actualisation $E_5$ précédemment mentionnée dans la description.

On comprend ainsi que, par l'effet de l'incrémentation à l'étape $E_4$, l'utilisateur ayant choisi un accès constitutif d'une nouvelle visualisation, celle-ci lui sera imputée en tant que telle, le nouvel accès étant constitutif d'une nouvelle visualisation.

Un exemple de mise en oeuvre du protocole objet de la présente invention, pour un service correspondant à un retour arrière simple sur enregistrement, à partir d'un appareil tel qu'un magnétoscope, sera maintenant décrit en liaison avec la figure 2.

A titre d'exemple non limitatif, dans cette situation, le nombre maximum de visualisations NVM peut, par exemple, être pris égal à 1 et l'intervalle ou la plage temporelle, pour laquelle l'accès est autorisé selon le critère d'accès spécifique et, en particulier, selon un accès libre, est défini par les paramètres ci-après :

- $td < 0$
- $tf=0$.

Dans une telle application au service précité, les variables booléennes sont forcées respectivement :

- $AV = 1$
- $AR=0$.

On comprend que, dans ces conditions, l'utilisateur se voit attribuer un intervalle maximum de visualisation par retour arrière, tel que défini précédemment. En dehors de cet intervalle, seule la visualisation par accès avant à partir de la position $T_{jo}$ est autorisée en raison de la valeur vraie respectivement fausse des variables booléennes précitées.

Un deuxième exemple de mise en oeuvre du protocole objet de la présente invention, dans une application à un service de prévisualisation, encore désigné "Preview" en langage anglo-saxon, sera décrit en liaison avec la même figure 2.

Le service de prévisualisation précité correspond, en fait, à une autorisation gratuite d'accès en avant par rapport à l'origine de la base de temps.

Dans une telle situation, à titre d'exemple non limitatif, le nombre maximum de visualisations peut, par exemple, être pris égal à un; NVM = 1.

La zone temporelle d'accès selon le critère d'accès spécifique, tel que le critère d'accès libre précédemment mentionné dans la description, est alors définie par :
td = 0
tf>0.

Dans ces conditions, pour le service de prévisualisation, les variables booléennes de commande de marche avant respectivement arrière du magnétoscope peuvent être prises égales à AV = 0 et AR = 0. Dans ces conditions, dans le cadre du service de prévisualisation précité, l'utilisateur est donc habilité uniquement à visualiser l'intervalle ou plage temporelle précité sur un nombre de quanta successifs d'informations embrouillées déterminé par l'amplitude |tf - td| déterminée de manière spécifique. On rappelle que l'amplitude de la zone temporelle précitée peut correspondre, par exemple, à trois minutes de visualisation.

Un troisième mode de mise en oeuvre du protocole objet de la présente invention, dans une application ou contrôle du nombre de visualisations lors de la diffusion d'un programme en boucle par exemple, sera maintenant décrit en liaison avec la même figure 2.

Dans cette application, le nombre de visualisations maximum NVM peut être défini de manière arbitraire pour le programme d'informations embrouillées considéré.

A titre d'exemple non limitatif, l'amplitude de la zone temporelle, pour laquelle l'accès est autorisé selon le critère d'accès spécifique, c'est-à-dire l'accès libre, peut, arbitrairement, être fixée à la valeur nulle, c'est-à-dire td = 0 ET tf=0.

Dans ces conditions, on comprend que l'utilisateur se voit autorisé à consulter tout programme d'informations embrouillées diffusé en boucle selon un critère d'accès différent du critère d'accès spécifique, ce critère d'accès correspondant à la vérification d'au moins un droit d'accès inscrit dans la carte allouée à cet utilisateur.

Dans cette situation, seule la marche avant simple, c'est-à-dire l'accès aux quanta d'informations embrouillées successifs est autorisé, les variables booléennes prenant les valeurs :

- AV=1

- AR=0.

## Revendications

1. Méthode de contrôle d'accès à des informations embrouillées au niveau d'un centre d'émission au moyen d'une clé de service contenue dans un mot de contrôle, ce mot de contrôle étant chiffré au moyen d'une clé d'exploitation, cette méthode de contrôle d'accès consistant au moins à transmettre, vers au moins un terminal de désembrouillage associé à un module de contrôle d'accès muni d'un processeur de sécurité, lesdites informations embrouillées et des messages de contrôle d'accès périodiques, messages ECM, comportant des critères d'accès et le cryptogramme du mot de contrôle, le mot de contrôle et le cryptogramme du mot de contrôle étant changés périodiquement, l'accès auxdites informations embrouillées au niveau de chaque terminal de désembrouillage étant conditionnel à la vérification à la valeur vraie desdits critères d'accès vis-à-vis d'au moins un droit d'accès inscrit dans le module de contrôle d'accès, puis au déchiffrement dudit cryptogramme du mot de contrôle au moyen de la clé d'exploitation afin de restituer ledit mot de contrôle et effectuer le désembrouillage desdites informations embrouillées,

**caractérisée en ce que** ladite méthode consiste :

- à attribuer, à chaque message de contrôle d'accès, message ECM, un numéro ($T_j$) vérifiant une fonction monotone non décroissante, les messages $ECM_j$ consécutifs de numéro successif représentant une base de temps formée par une pluralité d'intervalles de temps élémentaires de transmission de quanta successifs élémentaires d'information embrouillée ;

- à détecter, au niveau de chaque terminal de désembrouillage, le numéro ($T_j$) de chaque message de contrôle d'accès, message $ECM_j$, puis, sur requête (UR) de l'utilisateur dudit terminal de désembrouillage d'un accès conditionnel contrôlé à au moins une partie desdites informations embrouillées,

- à sélectionner le numéro d'un message de contrôle d'accès, message $ECM_j$, correspondant à l'instant d'émission de ladite requête, et à constituer une origine de temps ($T_{jo}$) de ladite base de temps; et

- à autoriser l'accès auxdites informations embrouillées par ledit utilisateur en fonction d'un critère d'accès spécifique à partir de ladite origine ($T_{jo}$) de ladite base de temps, sur une plage temporelle correspondant à une pluralité d'intervalles de temps élémentaires définissant une pluralité de quanta successifs élémentaires d'informations embrouillées, ladite plage temporelle étant définie à partir de ladite origine ($T_{jo}$) par un premier décalage (td) par rapport à ladite origine correspondant au début de l'accès en fonction dudit critère d'accès spécifique et par un deuxième décalage (tf) correspondant à la fin de l'accès en fonction dudit critère d'accès spécifique.

2. Méthode selon la revendication 1, **caractérisée en ce que** ladite fonction monotone non décroissante est une fonction continûment croissante de la période d'émission des messages de contrôle $ECM_j$.

3. Méthode selon la revendication 1, **caractérisée en ce que** ladite fonction monotone non décroissante est une fonction croissante par paliers de l'instant d'émission des messages de contrôle $ECM_j$.

4. Méthode selon la revendication 3, **caractérisée en ce que** chaque palier est défini par un numéro constant sur plusieurs périodes d'émission des messages de contrôle $ECM_j$, ce qui permet de définir une base de temps de résolution distincte de la période d'émission des messages de contrôle $ECM_j$.

5. Méthode selon la revendication 4, **caractérisée en ce que** chaque numéro est défini par une date, chaque palier étant défini par la plage temporelle représentée par deux dates distinctes.

6. Méthode selon la revendication 1, **caractérisée en ce que** ledit critère d'accès spécifique correspond à un accès libre.

7. Méthode selon l'une des revendications 2 à 6, **caractérisée en ce que** ladite plage temporelle est soit un intervalle en arrière de ladite origine, td <=0 ET tf<=0, soit un intervalle en avant de ladite origine, td>=0 ET tf>=0, ou encore un intervalle avant et arrière, td <= 0 ET tf >= 0.

8. Méthode selon l'une des revendications 1 à 7, **caractérisée en ce que**, pour assurer une gestion du nombre de visualisations (NV) sur requête de l'utilisateur selon ledit critère d'accès spécifique dans ladite plage temporelle et en dehors de ladite plage temporelle, celle-ci consiste au moins :

- à définir un nombre maximum autorisé de visualisations (NVM) ;
- à soumettre le nombre de visualisations (NV) à un test de comparaison d'infériorité ou d'égalité audit nombre de visualisations maximales autorisé (NVM) ; et sur réponse négative audit test de comparaison d'infériorité ou d'égalité,
- à refuser l'accès aux informations embrouillées et à soumettre ledit numéro ($T_j$) courant à un test d'appartenance à ladite plage temporelle sinon ; et sur critère d'appartenance dudit numéro ($T_j$) courant à ladite plage temporelle,
- à autoriser l'accès sur critère d'accès spécifique pendant ladite plage temporelle auxdites informations embrouillées et à autoriser l'accès sur critère d'accès distinct dudit critère d'accès spécifique conditionnellement à la valeur vraie de variables booléennes représentatives de l'autorisation d'accès avant respectivement d'accès arrière, sinon.

9. Méthode selon la revendication 8, **caractérisée en ce que** celle-ci consiste en outre :

- à définir une première variable booléenne (AV) dont la valeur vraie est représentative de l'autorisation de l'accès avant auxdites informations embrouillées au-delà de ladite plage temporelle, sur critère d'accès distinct dudit critère d'accès spécifique ;
- à définir une deuxième variable booléenne (AR) dont la valeur vraie est représentative de l'autorisation de l'accès arrière auxdites informations embrouillées en deçà de ladite plage temporelle sur critère d'accès distinct dudit critère d'accès spécifique.

10. Méthode selon la revendication 8 ou 9, **caractérisée en ce que**, en l'absence d'appartenance dudit numéro ($T_j$) courant à ladite plage temporelle, ladite autorisation d'accès sur critère d'accès distinct dudit critère d'accès spécifique conditionnellement à la valeur vraie desdites variables booléennes consiste :

- à soumettre ledit numéro ($T_j$) courant et ladite première variable booléenne (AV) à un premier test logique comportant la vérification de l'égalité ou de la supériorité dudit numéro ($T_j$) courant à ladite origine ($T_{jo}$) et la vérification de la valeur vraie de ladite première variable booléenne, pour autoriser l'accès avant auxdites informations embrouillées, ou à un deuxième test logique comportant la vérification de l'égalité ou de l'infériorité dudit numéro ($T_j$) courant à ladite origine ($T_{jo}$) et la vérification de la valeur vraie de ladite deuxième variable booléenne, pour autoriser l'accès arrière auxdites informations embrouillées, et, sur réponse positive à l'un ou l'autre des premier respectivement deuxième tests logiques,
- à autoriser l'accès avant respectivement arrière en l'absence d'incrémentation du nombre de visualisations auxdites informations embrouillées ; et, sur réponse négative à l'un et l'autre des premier respectivement deuxième test logiques,
- à soumettre ledit nombre de visualisations (NV) à un test de comparaison d'infériorité au nombre de visualisations maximales autorisé (NVM) ; et, sur réponse négative audit test de comparaison d'infériorité,
- à refuser l'accès aux informations embrouillées et à soumettre ledit nombre de visualisations (NV) à une incrémentation d'une unité puis à autoriser l'accès avant respectivement arrière auxdites informations embrouillées, sinon.

11. Méthode selon la revendication 10, **caractérisée en ce que**, pour un contrôle d'accès spécifique correspondant à un service de retour arrière simple sur enregistrement et nombre de visualisations maximum autorisé NVM = 1, ladite plage temporelle est une plage arrière définie par td<0 ET tf=0, la première variable booléenne est à la valeur vraie, la marche avant étant autorisée, et la deuxième variable booléenne arrière est à la valeur complémentée de la valeur vraie, la marche arrière n'étant pas autorisée.

12. Méthode selon la revendication 10, **caractérisée en**

**ce que**, pour un contrôle d'accès spécifique correspondant à service de prévisualisation à accès libre, ladite plage temporelle est une plage avant définie par td=0 ET tf>0, le nombre de visualisations maximum autorisé est NVM = 1, la première et la deuxième variables booléennes étant à la valeur complémentée de la valeur vraie, l'enregistrement et/ou le retour arrière n'étant pas autorisés.

13. Méthode selon la revendication 10, **caractérisée en ce que**, pour une diffusion d'informations embrouillées en boucle, ledit nombre de visualisations maximum autorisé est établi à une valeur déterminée, ladite plage temporelle d'accès aux informations embrouillées présente une valeur spécifique, la première variable booléenne est à la valeur vraie et la deuxième variable booléenne est à la valeur complémentée de la valeur vraie.

**Claims**

1. Procedure for controlling access to information scrambled at the level of a transmission centre by means of a service key contained in a control word, this control word being enciphered by means of an operating key, this access control procedure consisting at least in sending, to at least one descrambling terminal associated with an access control module furnished with a security processor, the said scrambled information and periodic access control messages, ECM messages, comprising access criteria and the cryptogram of the control word, the control word and the cryptogram of the control word being changed periodically, access to the said scrambled information at the level of each descrambling terminal being conditional on the satisfaction of the value true of the said access criteria in relation to at least one access right registered in the access control module, then in deciphering the said cryptogram of the control word by means of the operating key so as to retrieve the said control word and perform the descrambling of the said scrambled information, **characterized in that** the said procedure consists:

- in allocating, to each access control message, ECM message, a number ($T_j$) satisfying a non-decreasing monotonic function, the consecutive messages $ECM_j$ of successive number representing a time base formed by a plurality of elementary time intervals for sending successive elementary quanta of scrambled information;
- in detecting, at the level of each descramoling terminal, the number ($T_j$) of each access control message, message $ECM_j$, then, on request (UR) of the user of che said terminal for descrambling a controlled conditional access to at least part of the said scrambled information,

- in selecting the number of an access control message, message $ECM_j$, corresponding to the instant at which said request is transmitted, and in constituting a time origin ($T_{jo}$) of the said time base; and
- in authorizing access to the said scrambled information by the said user as a function of a specific access criterion from the said origin ($T_{jo}$) of the said time base, over a time range corresponding to a plurality of elementary time intervals defining a plurality of elementary successive quanta of scrambled information, the said time range being defined from the said origin ($T_{jo}$) by a first offset (td) with respect to the said origin corresponding to the start of access as a function of the said specific access criterion and by a second offset (tf) corresponding to the end of access as a function of the said specific access criterion.

2. Procedure according to Claim 1, **characterized in that** the said nondecreasing monotonic function is a continually increasing function of the transmission period of the control messages $ECM_j$.

3. Procedure according to Claim 1, **characterized in that** the said nondecreasing monotonic function is a tiered increasing function of the instant of transmission of the control messages $ECM_j$.

4. Procedure according to Claim 3, **characterized in that** each tier is defined by a number that is constant over several periods of transmission of the control messages $ECM_j$, thereby making it possible to define a time base of resolution distinct from the transmission period of the control messages $ECM_j$.

5. Procedure according to Claim 4, **characterized in that** each number is defined by a date, each tier being defined by the time range represented by two distinct dates.

6. Procedure according to Claim 1, **characterized in that** the said specific access criterion corresponds to free access.

7. Procedure according to one of Claims 2 to 6, **characterized in that** the said time range is either an interval backward from the said origin, td <= 0 AND tf <= 0, or an interval forward from the said origin, td >= 0 AND tf >= 0, or else a forward and backward interval, td <= 0 AND tf >= 0.

8. Procedure according to one of Claims 1 to 7, **characterized in that**, to ensure management of the number of viewings (NV) on request of the user according to the said specific access criterion in the said time range and outside of the said time range, the latter consists at least:

- in defining an authorized maximum number of viewings (NVM);
- in submitting the number of viewings (NV) to a comparison test of inferiority to or equality with the said authorized number of maximum viewings (NVM); and on negative response to the said inferiority or equality comparison test,
- in denying access to the scrambled information and in submitting the said current number ($T_j$) to a test of membership in the said time range otherwise; and on criterion of membership of the said current number ($T_j$) in the said time range,
- in authorizing access on specific access criterion during the said time range to the said scrambled information and in authorizing access on access criterion distinct from the said specific access criterion conditionally on the value true of Boolean variables representative of the authorization of forward access respectively of backward access, otherwise.

9. procedure according to Claim 8, **characterized in that** the latter furthermore consists:

- in defining a first Boolean variable (AV) whose value true is representative of the authorization of forward access to the said scrambled information after the said time range, on access criterion distinct from the said specific access criterion;
- in defining a second Boolean variable (AR) whose value true is representative of the authorization of backward access to the said scrambled information before the said time range on access criterion distinct from the said specific access criterion.

10. Procedure according to Claim 8 or 9, **characterized in that**, in the absence of membership of the said current number ($T_j$) in the said time range, the said access authorization on access criterion distinct from the said specific access criterion conditionally on the value true of the said Boolean variables consists:

- in submitting the said current number ($T_j$) and the said first Boolean variable (AV) to a first logic test comprising the checking of the equality with or the superiority of the said current number ($T_j$) to the said origin ($T_{jo}$) and the checking of the value true of the said first Boolean variable, so as to authorize forward access to the said scrambled information, or to a second logic test comprising the checking of the equality with or of the inferiority of the said current number ($T_j$) to the said origin ($T_{jo}$) and the checking of the value true of the said second Boolean variable, so as to authorize backward access to the said scrambled information, and, on positive response to either of the first respectively second logic tests,

- in authorizing forward respectively backward access in the absence of incrementation of the number of viewings to the said scrambled information; and, on negative response to both the first respectively second logic tests,

- in submitting the said number of viewings (NV) to a comparison test of inferiority to the authorized number of maximum viewings (NVM); and, on negative response to the said inferiority comparison test,

- in denying access to the scrambled information and in submitting the said number of viewings (NV) to an incrementation by one unit then in authorizing forward respectively backward access to the said scrambled information, otherwise.

11. Procedure according to Claim 10, **characterized in that**, for a specific access control corresponding to a simple rewind service on recording and maximum authorized number of viewings NVM = 1, the said time range is a backward range defined by td < 0 AND tf= 0, the first Boolean variable has the value true, forwarding being authorized, and the backward second Boolean variable has the complement value of the value true, rewinding not being authorized.

12. Procedure according to Claim 10, **characterized in that**, for a specific access control corresponding to free-access preview service, the said time range is a forward range defined by td= 0 AND tf > 0, the maximum authorized number of viewings is NVM = 1, the first and the second Boolean variables having the complement value of the value true, recording and/or rewinding not being authorized.

13. Procedure according to Claim 10, **characterized in that**, for looped broadcasting of scrambled information, the said maximum authorized number of viewings is established at a determined value, the said time range for access to the scrambled information exhibits a specific value, the first Boolean variable has the value true and the second Boolean variable has the complement value of the value true.

**Patentansprüche**

1. Steuerverfahren für den Zugriff auf Informationen, die seitens eines Sendezentrums mittels eines in einem Steuerwort enthaltenen Dienstschlüssels verschlüsselt sind, wobei das Steuerwort mittels eines Auswertungsschlüssels verschlüsselt ist, wobei das Zugriffssteuerverfahren aufweist: mindestens das Übertragen der verschlüsselten Informationen und von periodischen Zugriffssteuernachrichten, nämlich ECM-Nachrichten (ECM, Entitlement Control Message, Berechtigungs-Steuer-Nachricht), die Zugriffskriterien und das Kryptogramm des Steuerwortes aufweisen, wobei das Steuerwort und das Kryptogramm des Steuerwortes periodisch geändert werden, an mindestens ein Entschlüsselungsendgerät, das einem Zugriffssteuermodul zugeordnet ist, das einen Sicherheitsprozessor aufweist, wobei der Zugriff auf die verschlüsselten Informationen seitens jedes Entschlüsselungsendgeräts bedingt ist durch die Verifizierung des Wahr-Werts der Zugriffskriterien gegenüber mindestens einem Zugriffsrecht, das in dem Zugriffssteuermodul eingeschrieben ist, sowie anschließend durch die Entschlüsselung des Kryptogramms des Steuerwortes mittels des Auswertungsschlüssels zum Rekonstruieren des Steuerwortes und zum Durchführen der Entschlüsselung der verschlüsselten Informationen, **dadurch gekennzeichnet, dass** das Verfahren aufweist:

- Zuweisen einer Nummer T(j) zu jeder zugriffssteuernachricht (ECM-Nachricht), eine monotone, nicht absteigende Funktion verifizierend, wobei die aufeinanderfolgenden $ECM_j$-Nachrichten mit aufeinanderfolgender Nummer eine Zeitbasis darstellen, die durch eine Mehrzahl von elementaren Zeitintervallen für die Übertragung von aufeinanderfolgenden elementaren Quanten verschlüsselter Information gebildet wird,

- Erfassen der Nummer ($T_j$) jeder Zugriffssteuernachricht ($ECM_j$-Nachricht) seitens jedes Entschlüsselungsendgerätes, und anschließend, auf Anfrage (UR) des Benutzers des Entschlüsselungsendgerätes eines bedingten gesteuerten Zugriffs auf zumindest einen Teil der verschlüsselten Informationen,

- Auswählen der Nummer einer Zugriffssteuernachricht ($ECM_j$-Nachricht), die dem Sendezeitpunkt der Anfrage entspricht, und Bilden eines Zeitursprungs ($T_{jo}$) der Zeitbasis, und

- Autorisieren des Zugriffs auf die verschlüsselten Daten durch den Benutzer in Abhängigkeit von einem spezifischen Zugriffskriterium ausgehend von dem Ursprung ($T_{jo}$) der Zeitbasis über einen Zeitbereich, der einer Mehrzahl von elementaren Zeitintervallen entspricht, die eine Mehrzahl von aufeinanderfolgenden elementaren Quanten verschlüsselter Informationen definieren, wobei der Zeitbereich ausgehend von dem Ursprung ($Tj_o$) durch eine erste Verschiebung (td) im Verhältnis zu dem Ursprung definiert wird, der dem Anfang des Zugriffs in Abhängigkeit von dem spezifischen Zugriffskriterium entspricht, und durch eine zweite Verschiebung (tf), die dem Ende des Zugriffs in Abhängigkeit von dem spezifischen zugriffskriterium entspricht.

2. Verfahren gemäß Anspruch 1, **dadurch gekennzeichnet, dass** die monotone nicht absteigende Funktion eine ab dem Sendezeitpunkt der $ECM_j$-Steuernachrichten kontinuierlich ansteigende Funktion ist.

3. Verfahren gemäß Anspruch 1, **dadurch gekennzeichnet, dass** die monotone nicht absteigende Funktion eine ab dem Sendezeitpunkt der $ECM_j$-Steuernachrichten stufenweise ansteigende Funktion ist.

4. Verfahren gemäß Anspruch 3, **dadurch gekennzeichnet, dass** jede Stufe durch eine über mehrere Sendeperioden der $ECM_j$-Steuernachrichten konstante Nummer definiert wird, wodurch das Definieren einer Zeitbasis mit unterschiedlicher Auflösung der Sendeperiode der $ECM_j$-Steuernachrichten ermöglicht wird.

5. Verfahren gemäß Anspruch 4, **dadurch gekennzeichnet, dass** jede Nummer durch einen Zeitpunkt definiert ist, wobei jede Stufe durch den durch zwei verschiedene Zeitpunkte repräsentierten Zeitbereich definiert ist.

6. Verfahren gemäß Anspruch 1, **dadurch gekennzeichnet, dass** das spezifische Zugriffskriterium einem freien Zugriff entspricht.

7. Verfahren gemäß einem der Ansprüche 2 bis 6, **dadurch gekennzeichnet, dass** der Zeitbereich entweder ein Intervall zurück von dem Ursprung, td <=0 UND tf<=0, oder ein Intervall nach vorne von dem Ursprung, td >=0 UND tf>=0, oder auch ein Intervall vor und zurück, td <= 0 UND tf >=0 ist.

8. Verfahren gemäß einem der Ansprüche 1 bis 7, **dadurch gekennzeichnet, dass** zum Sicherstellen einer Verwaltung der Anzahl von Darstellungen (NV) auf Anfrage durch den Benutzer gemäß dem spezifischen Zugriffskriterium in dem Zeitbereich und außerhalb des Zeitbereichs dieses zumindest Folgendes aufweist:

   - Definieren eine maximalen zulässigen Anzahl von Darstellungen (NVM),
   - Unterziehen der Darstellungs-Anzahl (NV) einem Test zum Vergleichen, ob diese kleiner oder gleich der maximal autorisierten Darstellungs-Anzahl (NVM) ist, und bei einer negativen Antwort auf den Kleiner-oder-Gleich-Test,
   - Verweigern des Zugriffs auf die verschlüsselten Informationen und andernfalls Unterziehen der laufenden Nummer ($T_j$) einem Test der Zugehörigkeit zu dem Zeitbereich, und bei einem Zugehörigkeitskriterium der laufenden Nummer ($T_j$) zu dem Zeitbereich,
- Autorisieren des Zugriffs bei einem spezifischen Zugriffskriterium während des Zeitbereichs auf die verschlüsselten Informationen und Autorisieren des Zugriffs bei einem sich von dem spezifischen Zugriffskriterium unterscheidenden Zugriffskriterium abhängig von dem Wahr-Wert von Booleschen Variablen, die die Vorzugriffsautorisierung, beziehungsweise andernfalls die Rückzugriffsautorisierung repräsentieren.

9. Verfahren gemäß Anspruch 8, **dadurch gekennzeichnet, dass** es ferner aufweist:

   - Definieren einer ersten Booleschen Variable (AV), deren Wahr-Wert repräsentativ ist für die Autorisierung des Vorzugriffs auf die verschlüsselten Informationen über den Zeitbereich hinaus, bei einem Zugriffskriterium, das sich von dem spezifischen Zugriffskriterium unterscheidet,
   - Definieren einer zweiten Booleschen Variable (AR), deren Wahr-Wert repräsentativ ist für die Autorisierung des Rückzugriffs auf die verschlüsselten Informationen vor dem Zeitbereich bei einem Zugriffskriterium, das sich von dem spezifischen Zugriffskriterium unterscheidet.

10. Verfahren gemäß Anspruch 8 oder 9, **dadurch gekennzeichnet, dass** bei Abwesenheit der Zugehörigkeit der laufenden Nummer ($T_j$) zu dem Zeitbereich die Zugriffsautorisierung bei einem Zugriffskriterium, das sich von dem spezifischen Zugriffskriterium unterscheidet, abhängig von dem Wahr-Wert der Booleschen Variablen aufweist:

   - Unterziehen der laufenden Nummer ($T_j$) und der ersten Booleschen Variable (AV) einem ersten Logiktest, der die Verifizierung, ob die laufende Nummer ($T_j$) gleich oder größer als der Ursprung ($T_{jo}$) ist, sowie die Verifizierung des Wahr-Wertes der ersten Booleschen Variable beinhaltet, zum Autorisieren des Vorzugriffs auf die verschlüsselten Informationen, oder das Unterziehen einem zweiten Logiktest, der die Verifizierung, ob die laufende Nummer ($T_j$) gleich oder kleiner als der Ursprung ($T_{jo}$) ist, sowie die Verifizierung des Wahr-Wertes der zweiten Booleschen Variable beinhaltet, zum Autorisieren des Rückzugriffs auf die verschlüsselten Informationen, und bei einer positiven Antwort auf den einen oder den anderen des ersten Logiktests beziehungsweise des zweiten Logiktests,

- Autorisieren des Vorzugriffs beziehungsweise des Rückzugriffs in Abwesenheit einer Inkrementierung der Anzahl von Darstellungen auf die verschlüsselten Informationen, und, bei einer negativen Antwort auf den einen und den anderen des ersten Logiktests beziehungsweise des zweiten Logiktests,

- Unterziehen der Anzahl von Darstellungen (VN) einem Test zum Vergleichen, ob diese kleiner ist als die maximal zulässige Anzahl der Darstellungen (VNM), und bei einer negativen Antwort auf den Kleiner-Vergleichstest:

- Verweigern des zugriffs auf die verschlüsselten Informationen und Unterziehen der Anzahl von Darstellungen (NV) einer Inkrementierung um eine Einheit und andernfalls anschließendes Autorisieren des Vorzugriffs beziehungsweise Rückzugriffs auf die verschlüsselten Informationen.

11. Verfahren gemäß Anspruch 10, **dadurch gekennzeichnet, dass** für eine Steuerung eines spezifischen Zugriffs, der einem einfachen Rücklaufdienst bei Aufzeichnung und einer maximal autorisierten Anzahl von Darstellungen NVM =1 entspricht, der Zeitbereich ein Rückbereich ist, der durch td<0 UND tf=0 definiert ist, und die erste Boolesche Variable auf dem Wahr-Wert ist wenn der Vorbetrieb autorisiert ist, und die zweite Boolesche Rück-Variable auf dem komplementären Wert zu dem Wahr-Wert ist wenn der Rückbetrieb nicht autorisiert ist.

12. Verfahren gemäß Anspruch 10, **dadurch gekennzeichnet, dass** für eine Steuerung eines spezifischen zugriffs, einem Vorschaudienst mit freiem Zugriff entsprechend, der Zeitbereich ein Vorbereich ist, der durch td=0 UND tf>0 definiert ist, die maximal autorisierte Anzahl von Darstellungen NVM = 1 ist, wobei die erste und die zweite Boolesche Variable auf dem zu dem Wahr-Wert komplementären Wert sind, wenn die Aufzeichnung und/oder der Rücklauf nicht autorisiert sind.

13. Verfahren gemäß Anspruch 10, **dadurch gekennzeichnet, dass** für eine Schleifenausstrahlung von verschlüsselten Informationen die maximal autorisierte Anzahl von Darstellungen auf einen bestimmten Wert festgesetzt ist, der zeitbereich für den Zugriff auf die verschlüsselten Informationen einen spezifischen Wert darstellt und die erste Boolesche Variable auf dem Wahr-Wert ist und die zweite Boolesche Variable auf dem zu dem Wahr-Wert komplementären Wert ist.

CE

$I^* \; Tjo$
$ECM_j \; CW_j$
$I^*_{j-1,j} \xrightarrow{D_k}$ — A

Transmission — — — — — — — — — — — — — — — —

$D_k$

| Détection$_j$ |
| --- |
| → $(..,Tj-1,Tj,Tj+1,..)$ | — B

UR → 

| $UR$ |
| --- |
| $Tjo..Tj-1 \quad Tj \quad Tj+1$ | — C

| $\Delta(Tjo,td,tf)$ |
| --- |
| $\Delta I^* = \Delta(Tjo,td,tf) \; (I^*)$ | — D

Autorisation
d'accès à $\Delta I^*$ — E

## FIG.1a

δ(j)

1)

...............- Tj-1  Tj  Tj+1 ...........................

2)

Tjo+td      Tjo+tf  Tjo

3)

Tjo      Tjo+td      Tjo+tf

4)

Tjo+td  Tjo      Tjo+tf

## FIG.1b

Tjo      ........ Tj-1 ≤ Tj ≤ Tj+1 ..........................

1)

Tjo      Tj-1      Tj      Tj+1

2)

·102678s      102690s      102702s

## FIG.1c

**FIG.2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20010012366 A1
- WO 0120836 A
- EP 0884906 A